# FASCICULE DE BREVET EUROPEEN

(11) **EP 3 372 498 B1**
(45) Date de publication et mention de la délivrance du brevet: **11.09.2019**
(21) Numéro de dépôt: 18160344.0
(22) Date de dépôt: 06.03.2018
(51) Int. Cl.: B64C 27/57, G05D 1/00, G05D 1/08

(54) **DISPOSITIF DE PILOTAGE AUTOMATIQUE D'UN AÉRONEF À VOILURE TOURNANTE ET AÉRONEF À VOILURE TOURNANTE COMPRENANT UN TEL DISPOSITIF**
AUTOPILOT FÜR EIN DREHFLÜGELFLUGZEUG, UND DREHFLÜGELFLUGZEUG MIT EINER SOLCHEN VORRICHTUNG
AUTOMATIC PILOT DEVICE FOR A ROTARY WING AIRCRAFT AND ROTARY WING AIRCRAFT COMPRISING SUCH DEVICE

(30) Priorité: 07.03.2017 FR 1700225
(43) Date de publication de la demande: 12.09.2018
(73) Titulaire: THALES, 92400 Courbevoie (FR)
(72) Inventeur: COLONNA, François, 31036 TOULOUSE (FR); THOUVENOT, Gilles, 26027 VALENCE Cedex (FR); AUGER, Alain, 31700 MERIGNAC (FR)
(74) Mandataire: Lavoix

(56) Documents cités:
- DE-A1-102011 115 359
- FR-A3- 2 711 432
- US-A- 5 806 805

## Description

La présente invention concerne le domaine des dispositifs de pilotage automatique d'un aéronef à voilure tournante, tel qu'un hélicoptère.

Un dispositif de pilotage automatique d'hélicoptère peut posséder plusieurs modes de fonctionnement selon le niveau d'intervention du dispositif de pilotage automatique. Un dispositif de pilotage automatique d'hélicoptère peut posséder un mode d'assistance au pilotage dans lequel le dispositif de pilotage automatique aide au maintien de la position de l'hélicoptère en fonction des commandes effectuées par le pilote et donc de stabiliser l'hélicoptère, un mode de guidage de niveau inférieur, dans lequel le dispositif de pilotage automatique d'hélicoptère assure un guidage de l'hélicoptère, par exemple pour maintenir un cap, une altitude ou une vitesse horizontale, et un mode de guidage de niveau supérieur dans lequel le dispositif de pilotage automatique pilote l'hélicoptère pour la réalisation de certaines manoeuvres.

Il est possible de prévoir un dispositif de pilotage automatique d'hélicoptère comprenant, d'une part, des actionneurs agencés pour commander l'hélicoptère, et, d'autre part, un ou plusieurs calculateurs configurés pour calculer des consignes de pilotage des actionneurs, i.e. des consignes de position des actionneurs. FR2711432A1, US5806805A et DE102011115359A1 divulguent des dispositifs de pilotage d'aéronef de ce type, où un actionneur intègre un module de commande de puissance. Un des buts de l'invention est de proposer un dispositif de pilotage automatique qui soit léger tout en étant robuste du point de vue de la sécurité du vol.

A cet effet, l'invention propose un dispositif de pilotage automatique d'aéronef à voilure tournante, comprenant au moins un ensemble de pilotage automatique, chaque ensemble de pilotage automatique comprenant au moins deux actionneurs primaires configurés pour agir sur l'aéronef, dans lequel au moins un ou chacun des actionneurs primaires intègre une unité de calcul électronique configurée pour :
- communiquer avec, d'une part, un système de mesure embarqué de l'aéronef configuré pour générer des signaux de mesure représentatifs de paramètres de vols de l'aéronef, et/ou, d'autre part, un poste de commande utilisable par un équipage pour piloter l'aéronef et configuré pour générer des signaux de commande en fonction des actions de l'équipage, et
- calculer, en fonction des signaux de mesure et/ou des signaux de commande, une consigne de pilotage pour l'actionneur primaire intégrant cette unité de calcul et/ou un consigne de pilotage pour au moins un ou chaque autre actionneur primaire de l'ensemble de pilotage automatique, pour le pilotage de l'aéronef par le dispositif de pilotage automatique.

Le calcul de consignes de pilotage par une ou plusieurs unités de calcul intégrées dans un ou plusieurs des actionneurs primaires du dispositif de pilotage automatique permet de limiter le poids du dispositif de pilotage automatique. En outre, cela supprime les latences de communications.

Le dispositif de pilotage automatique peut être rendu robuste, en particulier lorsque le dispositif de pilotage automatique repose sur au moins deux unités de calcul intégrées qui peuvent effectuer des calculs redondants, effectuer des comparaisons et/ou surveiller le fonctionnement des différents actionneurs primaires.

Dans des modes de réalisation particuliers, le dispositif de pilotage automatique comprend une ou plusieurs des caractéristiques optionnelles suivantes, prises isolément ou selon toutes les combinaisons techniquement possibles :
- au moins une dite unité de calcul est configurée pour calculer une consigne de pilotage pour l'actionneur primaire intégrant cette unité de calcul, l'actionneur primaire étant configuré pour appliquer cette consigne de pilotage ;
- chaque actionneur primaire intègre une dite unité de calcul configurée pour calculer une consigne de pilotage pour l'actionneur primaire intégrant cette unité de calcul et/ou une consigne de pilotage pour au moins un ou chaque autre actionneur primaire de l'ensemble de pilotage automatique ;
- chaque actionneur primaire est configuré pour appliquer une consigne de pilotage calculée par une dite unité de calcul intégrée dans cet actionneur primaire.
- au moins un ou chaque actionneur primaire est configuré pour fournir une consigne de direction de vol, et commander l'affichage de ladite consigne sur un directeur de vol ;
- au moins une dite unité de calcul est configurée pour calculer pour l'actionneur primaire intégrant cette unité de calcul et/ou pour au moins un ou chaque autre actionneur primaire de l'ensemble de pilotage automatique, une consigne de pilotage de commande et une consigne de pilotage de contrôle selon de deux manières distinctes ;
- l'ensemble de pilotage automatique comprend un actionneur primaire configuré pour agir sur le roulis de l'aéronef, un actionneur primaire configuré pour agir sur le tangage de l'aéronef et/ou un actionneur primaire configuré pour agir sur le lacet de l'aéronef ;
- il comprend un ensemble de compensation comprenant au moins un actionneur de compensation, au moins une dite unité de calcul intégrée dans un actionneur primaire étant configurée pour calculer une consigne de compensation pour au moins un ou chaque actionneur de compensation ;
- une dite unité de calcul est configurée pour calculer, pour l'actionneur primaire intégrant cette unité de calcul et/ou pour au moins un ou chaque autre actionneur primaire de l'ensemble de pilotage automatique, une consigne de guidage pour le guidage de l'aéronef par le dispositif de pilotage automatique ; et
- il comprend au moins deux ensembles de pilotage automatique dont les actionneurs primaires respectifs sont prévus pour agir en parallèle sur l'aéronef.

L'invention concerne également un aéronef à voilure tournante comprenant un système de mesure embarqué configuré pour mesurer des paramètres de vols de l'aéronef, un poste de commande utilisable par un équipage pour piloter l'aéronef et un dispositif de pilotage automatique tel que défini ci-dessus.

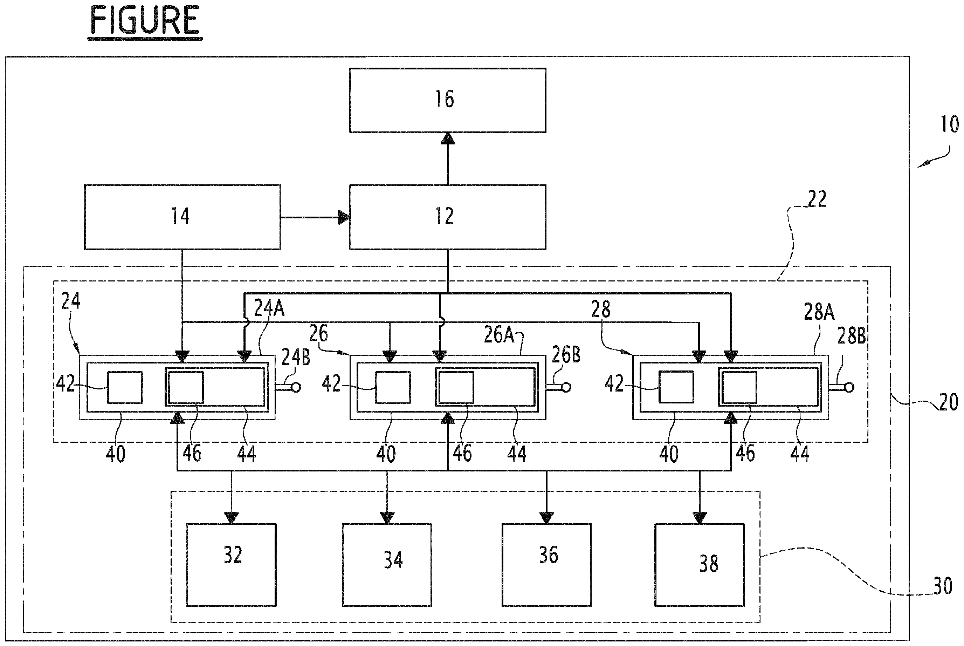

L'invention et ses avantages seront mieux compris à la lecture de la description qui va suivre, donnée uniquement à titre d'exemple, et faite en référence à l'unique Figure annexée, qui est une vue schématique d'un aéronef à voilure tournante comprenant un dispositif de pilotage automatique.

La suite de la description fait référence au repère orthogonal usuel des aéronefs comprenant un axe de roulis, un axe de tangage et un axe de lacet.

L'aéronef 10 à voilure tournante de la Figure est par exemple un hélicoptère comprenant au moins un rotor de sustentation. L'aéronef 10 peut comprendre un ou plusieurs rotors de sustentation. Lorsque l'aéronef 10 comprend un seul rotor de sustentation, il comprend en général un rotor anti-couple.

L'aéronef 10 comprend un poste de commande 12 permettant à un équipage de piloter l'hélicoptère. De manière classique, le poste de commande 12 comprend des organes primaires de commande manipulables par l'équipage pour piloter l'aéronef 10. Les organes primaires de commande comprennent par exemple un manche pour agir en roulis et en tangage sur l'aéronef, un palonnier pour agir en lacet sur l'aéronef, et un levier de pas collectif pour modifier la portance générée par la voilure tournante, par exemple pour modifier la vitesse ascensionnelle de l'aéronef 10.

Le poste de commande 12 est configuré pour générer des signaux de commande en fonction des actions de l'équipage.

L'aéronef 10 comprend un système de mesure 14 embarqué configuré pour mesurer des paramètres de vols de l'aéronef 10. Le système de mesure 14 comprend par exemple une centrale inertielle, des capteurs anémobarométriques, un système de géolocalisation par satellite, un ensemble de récepteurs de radiobalises, un système de référence de cap et d'attitude (ou AHRS qui est l'acronyme anglo-saxon pour « *Attitude and Heading Reference System* »), un ensemble de capteurs sur trois axes permettant de définir la position d'un avion dans l'espace grâce aux accélérations et aux champs magnétiques qu'ils subissent...

Les paramètres de vol comprennent par exemple la vitesse par rapport au sol, la vitesse par rapport à l'air, l'altitude, la hauteur par rapport au sol, la position géographique en latitude/longitude, l'attitude (tangage, roulis, lacet), le cap ...

Le système de mesure 14 est configuré pour générer des signaux de mesure représentatifs des paramètres de vol mesurés.

L'aéronef 10 comprend un dispositif d'affichage 16 permettant d'afficher des informations pour l'équipage. Le dispositif d'affichage 16 permet notamment d'afficher des informations relatives aux paramètres de vol et/ou des informations relatives aux commandes effectuées par l'équipage.

Le dispositif d'affichage 16 reçoit par exemple les signaux de commande générés par le poste de commande 12 et les signaux de mesure générés par le système de mesure 14, par l'intermédiaire du poste de commande 12.

L'aéronef 10 comprend un dispositif de pilotage automatique 20 configuré pour agir sur l'aéronef 10 pour stabiliser l'aéronef 10, i.e. pour assister l'équipage pour maintenir une configuration de vol, et/ou agir sur l'aéronef pour guider l'aéronef 10 de manière partiellement ou complètement autonome, i.e. pour maintenir un cap, maintenir une altitude, maintenir une vitesse longitudinale ou verticale, suivre une trajectoire bidimensionnelle ou tridimensionnelle, maintenir une position (vol stationnaire) ...

Le dispositif de pilotage automatique 20 comprend un ensemble de pilotage automatique 22 comprenant au moins un actionneur primaire 24, 26, 28, chaque actionneur primaire 24, 26, 28 étant agencé pour agir sur l'aéronef 10 pour stabiliser l'aéronef 10 et/ou pour guider l'aéronef 10.

De préférence, l'ensemble de pilotage automatique 22 comprend au moins un actionneur primaire 24 de roulis configuré pour agir sur le roulis de l'aéronef 10 et au moins un actionneur primaire 26 de tangage configuré pour agir sur le tangage de l'aéronef 10.

L'actionneur primaire 24 de roulis et l'actionneur primaire 26 de tangage de chaque ensemble de pilotage automatique 22 sont par exemple configurés pour agir sur l'inclinaison d'un plateau cyclique d'un rotor de sustentation de l'aéronef 10.

L'actionneur primaire 24 de roulis et l'actionneur primaire 26 de tangage sont nécessaires pour permettre au dispositif de pilotage automatique 20 d'assurer la stabilisation de l'aéronef 10.

Un aéronef 10 à voilure tournante tel qu'un hélicoptère est par nature instable en vol. De préférence, le dispositif de pilotage automatique 20 est toujours actif pour stabiliser l'aéronef 10.

Dans l'exemple illustré, l'ensemble de pilotage automatique 22 comprend en outre un actionneur primaire 28 de lacet configuré pour agir sur le lacet de l'aéronef 10.

Lorsque l'aéronef 10 est un hélicoptère possédant un rotor de sustentation et un rotor anti-couple, l'actionneur primaire de lacet 28 est configuré pour agir sur le rotor anti-couple.

Chaque actionneur primaire 24, 26, 28 comprend un corps 24A, 26A, 28A et un organe d'actionnement mobile 24B, 26B, 28B.

Dans l'exemple illustré, chaque actionneur primaire 24, 26, 28 est un actionneur linéaire. Chaque actionneur primaire 24, 26, 28 est un vérin. L'organe d'actionnement mobile 24B, 26B, 28B est une tige mobile en translation par rapport au corps 24A, 26A, 28A de l'actionneur primaire 24, 26, 28.

Le dispositif de pilotage automatique 20 comprend un ensemble de compensation 30 comprenant des actionneurs secondaires 32, 34, 36, 38 de compensation.

Chaque actionneur secondaire 32, 34, 36, 38 est configuré pour agir sur l'aéronef de manière à maintenir une assiette prédéfinie de l'aéronef 10 par défaut, en l'absence d'action de l'équipage et des actionneurs primaires 24, 26, 28.

L'ensemble de compensation 30 comprend au moins un actionneur secondaire 32 de roulis configuré pour agir sur le roulis de l'aéronef 10 et un actionneur secondaire 34 de tangage agencé pour agir sur le tangage de l'aéronef 10. En option, l'ensemble de compensation 30 comprend un actionneur secondaire 36 de lacet agencé pour agir sur le lacet de l'aéronef 10.

L'ensemble de compensation 30 comprend ici un actionneur secondaire 38 de pas collectif agencé pour modifier la portance générée par le rotor de sustentation de l'aéronef 10.

Les actionneurs secondaires 32, 34, 36, 38 sont configurés pour agir sur l'aéronef 10 avec une constante de temps plus grande que celle des actionneurs primaires 24, 26, 28.

Comme illustré sur la Figure, l'ensemble de pilotage automatique 22 est dépourvu d'actionneur primaire de pas collectif, seul l'actionneur secondaire 38 de pas collectif agissant sur l'aéronef 10. L'action sur le pas collectif avec une constante de temps relativement grande est suffisante, de sorte qu'un actionneur primaire de pas collectif n'est pas nécessaire.

Les actionneurs de compensation 32, 34, 36, 38 sont par exemple des actionneurs rotatifs.

Au moins un ou chaque actionneur primaire 24, 26, 28 intègre une unité de calcul 40 électronique.

Dans l'exemple illustré, chaque actionneur primaire 24, 26, 28 de l'ensemble de pilotage 22 intègre une unité de calcul 40. En variante, seulement un ou deux des actionneurs primaires 24, 26, 28 intègre une unité de calcul 40.

Chaque unité de calcul 40 est intégrée dans l'actionneur primaire 24, 26, 28 correspondant. Chaque unité de calcul 40 intégrée dans un actionneur primaire 24, 26, 28 est ici logée dans le corps 24A, 26A, 28A de cet actionneur primaire 24, 26, 28.

Chaque unité de calcul 40 est en communication avec, d'une part, le poste de commande 12 pour recevoir des signaux de commandes générés par le poste de commande 12, et, d'autre part, le système de mesure 14 pour recevoir des signaux de mesure générés par le système de mesure 14. Dans une alternative, les signaux de mesure générés par le système de mesure 14 passent par le poste de commande 12 qui les traite et les redirige vers l'unité de calcul 40.

Chaque unité de calcul 40 est configurée pour déterminer, en fonction des signaux de commande et/ou des signaux de mesure, au moins une consigne de pilotage d'au moins un actionneur primaire 24, 26, 28 de l'ensemble de pilotage automatique 22.

Une « consigne de pilotage » d'un actionneur primaire 24, 26, 28 désigne une consigne à appliquer par l'actionneur primaire 24, 26, 28 pour le pilotage de l'aéronef par le dispositif de pilotage automatique 20.

De préférence, au moins une ou chaque unité de calcul 40 est configurée pour déterminer, en fonction des signaux de commande et/ou des signaux de mesure, au moins une consigne de pilotage de l'actionneur primaire 24, 26, 28 intégrant cette unité de calcul 40.

De préférence également, chaque actionneur primaire 24, 26, 28 intégrant une unité de calcul 40 est configuré pour appliquer la consigne de pilotage calculée par cette unité de calcul 40.

Dans un mode de réalisation, chaque unité de calcul 40 est configurée pour calculer une consigne de pilotage de commande (dite consigne de pilotage « COM ») et une consigne de pilotage de contrôle (dite consigne de pilotage «MON») pour l'actionneur primaire 24, 26, 28 intégrant cette unité de calcul 40, et pour comparer la consigne de pilotage de commande et la consigne de pilotage de contrôle.

La consigne de pilotage de commande est destinée à être appliquée par l'actionneur primaire 24, 26, 28. La consigne de pilotage de contrôle est calculée de manière distincte de la consigne de pilotage de commande, i.e. à partir de signaux de mesures différents et/ou en fonction d'équations différentes, et sert à vérifier le calcul de la consigne de pilotage de commande pour des raisons de robustesse et de fiabilité.

En cas de différence de résultat entre la consigne de pilotage de commande et la consigne de pilotage de contrôle, l'unité de calcul 40 peut par exemple émettre un signal d'alerte ou mettre l'actionneur primaire 24, 26, 28 en mode alternatif, dégradé ou en défaut.

Dans un exemple de réalisation, au moins une ou chaque unité de calcul 40 intégrée dans un actionneur primaire 24, 26, 28 est configurée pour déterminer, en fonction des signaux de commande et/ou des signaux de mesure qu'elle reçoit, au moins une consigne de pilotage pour au moins un ou chaque autre actionneur primaire 24, 26, 28 de l'ensemble de pilotage automatique 22.

Dans un mode de réalisation, au moins une ou chaque unité de calcul 40 intégrée dans un actionneur primaire 24, 26, 28 est configurée pour calculer une consigne de pilotage de commande et une consigne de pilotage de contrôle pour au moins un ou chaque autre actionneur primaire 24, 26, 28 de l'ensemble de pilotage automatique 22 auquel appartient l'actionneur primaire 24, 26, 28 intégrant cette unité de calcul 40.

De préférence, chaque unité de calcul 40 calcule deux consignes de pilotage pour chaque actionnaire primaire 24, 26, 28 pour lequel elle calcule une consigne de pilotage, à savoir une consigne de pilotage de commande et une consigne de pilotage de contrôle.

De préférence, au moins une ou chaque unité de calcul 40 d'un actionneur primaire 24, 26, 28 de l'ensemble de pilotage automatique 22 est en communication avec au moins un ou chaque autre actionneur primaire 24, 26, 28 de l'ensemble de pilotage automatique 22 pour recevoir des signaux de fonctionnement émis par ledit autre actionneur primaire 24, 26, 28, et configurée pour comparer les signaux de fonctionnement dudit autre actionneur primaire 24, 26, 28 avec au moins une ou chaque consigne de pilotage calculée par l'unité de calcul 40 pour ledit autre actionneur primaire 24, 26, 28. Ainsi, l'unité de calcul 40 d'un actionneur primaire 24, 26, 28 peut surveiller le fonctionnement d'un autre actionneur primaire 24, 26, 28. Les actionneurs primaires 24, 26, 28 se surveillent entre eux.

Dans un mode de réalisation particulier, chaque unité de calcul 40 intégrée d'un actionneur primaire 24, 26, 28 de l'ensemble de pilotage automatique 22 est configurée pour :
- calculer au moins une consigne de pilotage pour chaque autre actionneur primaire 24, 26, 28 de l'ensemble de pilotage automatique 20, de préférence une consigne de pilotage de commande et une consigne de pilotage de contrôle pour chaque autre actionneur primaire 24, 26, 28 de l'ensemble de pilotage automatique 20,
- recevoir des signaux de fonctionnement provenant chaque autre actionneur primaire 24, 26, 28 de l'ensemble de pilotage automatique 20, et
- comparer les signaux de fonctionnement provenant de chaque autre actionneur primaire 24, 26, 28 avec au moins une ou chaque consigne de pilotage calculée par la dite unité de calcul 40 pour cet autre actionneur primaire 24, 26, 28.

Dans un mode de réalisation particulier, chaque unité de calcul 40 effectue ces opérations pour chaque autre actionneur primaire 24, 26, 28 de l'ensemble de pilotage automatique 22.

Comme illustré sur la Figure, en option, les actionneurs de compensation 32, 34, 36, 38 de l'ensemble de compensation 30 sont en communication avec les actionneurs primaires 24, 26, 28 de l'ensemble de pilotage automatique 20.

Au moins une unité de calcul 40 d'un actionneur primaire 24, 26, 28 de l'ensemble de pilotage automatique 20 est configurée pour calculer au moins une consigne de compensation d'au moins un actionneur de compensation 32, 34, 36, 38, l'actionneur de compensation 32, 34, 36, 38 étant configuré agir en fonction de la consigne de compensation déterminée par ladite unité de calcul 40.

Une « consigne de compensation » déterminée pour un actionneur de compensation 32, 34, 36, 38 est une consigne pour l'actionneur de compensation 32, 34, 36, 38.

Dans un mode de réalisation, au moins une ou chaque unité de calcul 40 est configurée pour calculer au moins une consigne de compensation pour chaque actionneur de compensation 32, 34, 36, 38.

Dans un mode de réalisation, les actionneurs de compensation 32, 34, 36, 38 appliquent chacun une consigne de compensation respective, les consignes de compensation étant calculées par une même unité de calcul 40.

En variante, au moins deux actionneurs de compensation 32, 34, 36, 38 appliquent des consignes de compensation respectives calculées par des unités de calcul 40 respectives. Ceci permet de répartir la charge de calcul des consignes de compensation.

Dans un mode de réalisation particulier, l'unité de calcul 40 de chaque actionneur primaire 24, 26, 28 affectée à un axe (roulis, tangage, lacet) de l'aéronef 10 est configurée pour calculer une consigne de compensation pour l'actionneur secondaire 32, 34, 36 affecté à ce même axe de l'aéronef 10, chaque actionneur secondaire 32, 34, 36 affecté à un axe (roulis, tangage, lacet) de l'aéronef 10 étant configuré pour appliquer la consigne de compensation calculée par l'unité de calcul 40 de l'actionneur primaire 24,26, 28 affecté au même axe (roulis, tangage, lacet) de l'aéronef 10.

De préférence, chaque unité de calcul 40 configurée pour calculer au moins une consigne de compensation pour un actionneur de compensation 32, 34, 36, 38 est configurée pour calculer, pour cet actionneur de compensation 32, 34, 36, 38, à la fois une consigne de compensation de commande et une consigne de compensation de contrôle de manières distinctes.

Dans un mode de réalisation, l'unité de calcul 40 d'au moins un actionneur primaire 24, 26, 28 est configuré calculer, pour au moins un ou chaque actionneur primaire 24, 26, 28 de l'ensemble de pilotage automatique 22, des consignes de guidage.

Dans chaque mode de guidage, le dispositif de pilotage automatique 20 agit sur l'aéronef 10 de manière automatique pour guider l'aéronef 10, i.e. pour suivre une trajectoire.

Chaque actionneur primaire 24, 26, 28 peut appliquer simultanément une consigne de pilotage pour la stabilisation de l'aéronef 10 et une consigne de guidage pour le guidage de l'aéronef 10. La consigne de pilotage et la consigne de guidage se superposent.

Les modes de pilotage automatique comprennent par exemple au moins un mode de guidage de niveau inférieur dans lequel le dispositif de pilotage automatique 20 agit pour capturer et/ou maintenir un cap, une route, une altitude et/ou une vitesse (longitudinale et/ou verticale).

Les modes de pilotage automatique comprennent par exemple au moins un mode de guidage de niveau supérieur dans lequel le dispositif de pilotage automatique 20 agit pour effectuer une manoeuvre de manière complètement autonome ou partiellement autonome.

Dans le cas d'une manoeuvre effectuée de manière complètement autonome, en principe l'équipage n'intervient pas, sauf par exemple pour reprendre la main en cas de problème.

Dans le cas d'une manoeuvre effectuée de manière partiellement autonome, le dispositif de pilotage automatique 20 effectue une partie des actions de guidage de manière autonome, tandis que l'équipage effectue une autre partie des actions de guidage par le biais du poste de commande 12.

Des exemples de modes de guidage de niveau supérieur sont par exemple le vol stationnaire, l'atterrissage automatique (ILS), le suivi d'un faisceau radioélectrique d'atterrissage utilisant une balise sol de type « Localizer » ou « Glideslope », une trajectoire en deux dimensions (2D) ou en trois dimensions (3D) de manoeuvre standardisée (par exemple une manoeuvre de recherche/sauvetage de type SAR (acronyme anglo-saxon pour « *Search And Rescue* »), le suivi d'une radiale d'une balise radioélectrique de type VOR/TACAN, le suivi d'un profil de vitesse au cours du temps, le suivi d'un plan de vol d'un système de gestion de vol ou d'un calculateur de mission (suivi d'une trajectoire reliant des points de passage dits « waypoint » en 2D ou 3D, comprenant éventuellement des contraintes à respecter, telles que des contraintes d'altitude, de vitesse, d'angle d'arrivée ...) ....

Les calculs pour les différents modes de guidage de l'aéronef 10 peuvent être effectués par une ou plusieurs des unités de calcul 40 des actionneurs primaires 24, 26, 28 de l'ensemble de pilotage automatique 22.

Les calculs des modes de guidage peuvent par exemple être répartis sur les unités de calcul 40 des différents actionneurs primaires 24, 26, 28 de l'ensemble de pilotage automatique 22, chaque unité de calcul 40 étant configurée pour calculer la consigne de guidage d'au moins un mode de guidage, les unités de calcul 40 étant configurées pour calculer des consignes de guidage de modes de guidage respectifs.

Ceci permet de répartir la charge de calcul sur les différentes unités de calcul 40 des actionneurs primaires 24, 26, 28 de l'ensemble de pilotage automatique.

Selon une répartition possible, non limitative :
- l'unité de calcul 40 de l'actionneur primaire 24 de roulis est configurée pour calculer les consignes de guidage d'un mode de guidage « HDG » (tenue de cap), « LOC » (suivi d'un faisceau issu d'une balise de type Localizer), « VOR » (suivi d'une radiale par rapport à une balise radioélectrique VHF Omnidirectional Range) ;
- l'unité de calcul 40 de l'actionneur primaire 26 de tangage est configurée pour calculer les consignes de guidage d'un mode de guidage « IAS » (tenue de vitesse air), « ALT » (tenue d'altitude), « ALTP » (capture d'altitude Préselectionnée), « G/S » (suivi d'un faisceau issu d'une balise de type GlideSlope); et
- l'unité de calcul 40 de l'actionneur primaire 28 de lacet est configurée pour calculer les consignes de guidage d'un mode de guidage de coordination de virage.

En option, l'unité de calcul 40 d'au moins ou de chaque actionneur primaire 24, 26, 28 de l'ensemble de pilotage automatique 22 est configurée pour calculer une consigne de direction de vol, prévue pour commander l'affichage d'un directeur de vol (« *Flight Director* » en anglais) sur le dispositif d'affichage 16.

Un directeur de vol est un instrument de bord fournissant une aide visuelle à l'équipage en indiquant les manoeuvres à appliquer pour maintenir l'aéronef 10 dans une configuration de vol déterminée ou sur une trajectoire déterminée.

Le directeur de vol peut par exemple afficher sur un écran du dispositif d'affichage 16 une représentation de l'aéronef 10 et un indicateur de vol, l'équipage devant agir sur les organes primaire de commande pour faire correspondre la représentation de l'aéronef 10 avec l'indicateur de vol pour maintenir l'aéronef 10 dans la configuration de vol déterminée ou sur la trajectoire déterminée.

Tel qu'illustrée sur la Figure, chaque unité de calcul 40 comprend un processeur 42 et une mémoire 44. Chaque unité de calcul 40 comprend une application informatique 46 comprenant des instructions de code enregistrées dans la mémoire 44 et exécutables par le processeur 42 pour la réalisation des calculs à effectuer par l'unité de calcul 40 (calcul de consigne de pilotage, calcul de consigne de compensation, calcul de consigne de guidage, comparaison d'une consigne de commande et d'une consigne de contrôle, surveillance d'un autre actionneur primaire...)

En variante ou en option, au moins une unité de calcul 40 comprend un composant logique programmable ou un circuit intégré dédié configuré pour réaliser la totalité ou une partie des calculs affectés à cette unité de calcul 40 pour le pilotage automatique de l'aéronef 10.

Sur la Figure, le dispositif de pilotage automatique 20 comprend un seul ensemble de pilotage automatique 22. On parle de mode « simplexe » dans le domaine aéronautique.

En variante, le dispositif de pilotage automatique 20 comprend deux ensembles de pilotage automatique 22 configurés pour agir en parallèle, pour des raisons de redondance et de robustesse. On parle alors de mode « duplexe » ou « dual » dans la terminologie aéronautique.

En variante, le dispositif de pilotage automatique 20 comprend trois ensembles de pilotage automatique 22 configurés pour agir en parallèle, pour des raisons de redondance et de robustesse. On parle alors de mode « triplexe » ou « trial » dans la terminologie aéronautique.

Dans les cas où le dispositif de pilotage automatique 20 comprend plusieurs ensembles de pilotage automatique 22, de préférence, une logique de commande des actionneurs primaires 24, 26, 28 peut être mise en place, où un des ensembles de pilotage automatique 22 est désigné « maître » par l'équipage via le poste de commande 12, et commande l'ensemble des actionneurs 24, 26, 28, tandis que le ou chaque autre ensemble de pilotage automatique 22 est désigné « esclave » ou « en écoute » (mode « standby » dans la terminologie aéronautique) et ne commande pas d'actionneurs 24, 26, 28.

Dans les cas où le dispositif de pilotage automatique 20 comprend plusieurs ensembles de pilotage automatique 22, dans une alternative, une logique de commande des actionneurs primaires 24, 26, 28 peut être mise en place par vote majoritaire.

Dans les cas où le dispositif de pilotage automatique 20 comprend plusieurs ensembles de pilotage automatique 22, dans une alternative, une logique de commande des actionneurs primaires 24, 26, 28 peut être mise en place par moyennage des consignes.

Dans les cas où le dispositif de pilotage automatique 20 comprend plusieurs ensembles de pilotage automatique 22, de préférence, les ensembles de pilotage automatique sont identiques. En particulier, les différentes caractéristiques indiquées ci-dessus pour l'ensemble de pilotage automatique 22 sont valables pour au moins un ou chacun des ensembles de pilotage automatique.

Dans une variante, les ensembles de pilotage automatique sont différents, par exemple au niveau matériel et/ou logiciel, mais issus de spécifications identiques, permettant ainsi de réduire les défaillances issus de modes de panne communs.

Le dispositif de pilotage automatique 20 repose sur une ou plusieurs unités de calcul intégrées dans un ou plusieurs actionneurs primaires 24, 26, 28 du dispositif de pilotage automatique. Ceci permet de limiter le poids du dispositif de pilotage automatique 20. En outre, cela supprime les latences de communications par rapport à un dispositif de pilotage automatique comprenant, d'une part, des calculateurs calculant les consignes, et, d'autre part, des actionneurs primaires.

Le dispositif de pilotage automatique 20 peut être rendu robuste, en particulier lorsque au moins deux ou chacun des actionneurs primaires 24, 26, 28 intègre(nt) une unité de calcul 40. En effet, les unités de calculs peuvent effectuer des calculs redondants et/ou surveiller le fonctionnement des différents actionneurs primaires 24, 26, 28.

## Revendications

1. Dispositif de pilotage automatique d'un aéronef à voilure tournante, comprenant au moins un ensemble de pilotage automatique (22), chaque ensemble de pilotage automatique (22) comprenant au moins deux actionneurs primaires (24, 26, 28) configurés pour agir sur l'aéronef, dans lequel au moins un ou chacun des actionneurs primaires (24, 26 ,28) intègre une unité de calcul (40) électronique configurée pour :
- communiquer avec, d'une part, un système de mesure (14) embarqué de l'aéronef configuré pour générer des signaux de mesure représentatifs de paramètres de vols de l'aéronef, et/ou, d'autre part, un poste de commande (12) utilisable par un équipage pour piloter l'aéronef et configuré pour générer des signaux de commande en fonction des actions de l'équipage, et
- calculer, en fonction des signaux de mesure et/ou des signaux de commande, une consigne de pilotage pour l'actionneur primaire (24, 26, 28) intégrant cette unité de calcul et/ou une consigne de pilotage pour au moins un ou chaque autre actionneur primaire (24, 26, 28) de l'ensemble de pilotage automatique (22), pour le pilotage de l'aéronef par le dispositif de pilotage automatique.

2. Dispositif de pilotage automatique selon la revendication 1, dans lequel au moins une dite unité de calcul (40) est configurée pour calculer une consigne de pilotage pour l'actionneur primaire (24, 26, 28) intégrant cette unité de calcul (40), l'actionneur primaire (24, 26, 28) étant configuré pour appliquer cette consigne de pilotage.

3. Dispositif de pilotage automatique selon la revendication 1 ou 2, dans lequel chaque actionneur primaire (24, 26, 28) intègre une dite unité de calcul (40) configurée pour calculer une consigne de pilotage pour l'actionneur primaire (24, 26, 28) intégrant cette unité de calcul (40) et/ou une consigne de pilotage pour au moins un ou chaque autre actionneur primaire (24, 26, 28) de l'ensemble de pilotage automatique (22).

4. Dispositif de pilotage automatique selon la revendication 3, dans lequel chaque actionneur primaire (24, 26, 28) est configuré pour appliquer une consigne de pilotage calculée par une dite unité de calcul (40) intégrée dans cet actionneur primaire (24, 26, 28).

5. Dispositif de pilotage automatique selon la revendication 3 ou 4, dans lequel au moins un ou chaque actionneur primaire (24, 26, 28) est configuré pour fournir une consigne de direction de vol, et commander l'affichage de ladite consigne sur un directeur de vol.

6. Dispositif de pilotage automatique selon l'une quelconque des revendications précédentes, dans lequel au moins une dite unité de calcul (40) est configurée pour calculer pour l'actionneur primaire (24, 26, 28) intégrant cette unité de calcul (40) et/ou pour au moins un ou chaque autre actionneur primaire (24, 26, 28) de l'ensemble de pilotage automatique (22), une consigne de pilotage de commande et une consigne de pilotage de contrôle selon de deux manières distinctes.

7. Dispositif de pilotage automatique selon l'une quelconque des revendications précédentes, dans lequel l'ensemble de pilotage automatique (22) comprend un actionneur primaire (24) configuré pour agir sur le roulis de l'aéronef, un actionneur primaire (26) configuré pour agir sur le tangage de l'aéronef et/ou un actionneur primaire (28) configuré pour agir sur le lacet de l'aéronef.

8. Dispositif de pilotage automatique selon l'une quelconque des revendications précédentes, comprenant un ensemble de compensation (30) comprenant au moins un actionneur de compensation (32, 34, 36, 38), au moins une dite unité de calcul (40) intégrée dans un actionneur primaire (24, 26, 28) étant configurée pour calculer une consigne de compensation pour au moins un ou chaque actionneur de compensation (32, 34, 36, 38).

9. Dispositif de pilotage automatique selon l'une quelconque des revendications précédente, dans lequel une dite unité de calcul (40) est configurée pour calculer, pour l'actionneur primaire (24, 26, 28) intégrant cette unité de calcul (40) et/ou pour au moins un ou chaque autre actionneur primaire (24, 26, 28) de l'ensemble de pilotage automatique (22), une consigne de guidage pour le guidage de l'aéronef par le dispositif de pilotage automatique.

10. Dispositif de pilotage automatique selon l'une quelconque des revendications précédentes, comprenant au moins deux ensembles de pilotage automatique (22) dont les actionneurs primaires (24, 26, 28) respectifs sont prévus pour agir en parallèle sur l'aéronef.

11. Aéronef à voilure tournante comprenant un système de mesure (14) embarqué configuré pour mesurer des paramètres de vols de l'aéronef, un poste de commande (12) utilisable par un équipage pour piloter l'aéronef et un dispositif de pilotage automatique (20) selon l'une quelconque des revendications précédentes.

## Patentansprüche

1. Vorrichtung zur automatischen Steuerung eines Drehflügel-Luftfahrzeugs, aufweisend wenigstens eine Einrichtung zur automatischen Steuerung (22), wobei jede Einrichtung zur automatischen Steuerung (22) aufweist wenigstens zwei primäre Aktuatoren (24, 26, 28), die konfiguriert sind zum Einwirken auf das Luftfahrzeug, wobei wenigstens einer oder jeder der primären Aktuatoren (24, 26, 28) eine elektronische Recheneinheit (40) umfasst, die konfiguriert ist zum:
- Kommunizieren mit, einerseits, einem Bord-Messsystem (14) des Luftfahrzeugs, das konfiguriert ist zum Erzeugen von Messsignalen, die repräsentativ sind für Flugparameter des Luftfahrzeugs, und/oder, andererseits, einer Befehlszentrale (12), die von einer Besatzung benutzbar ist zum Steuern des Luftfahrzeugs und die konfiguriert ist zum Erzeugen von Befehlssignalen in Abhängigkeit von den Aktionen der Besatzung, und
- Berechnen, in Abhängigkeit von den Messsignalen und/oder den Befehlssignalen, einer Steueranweisung für den primären Aktuator (24, 26, 28), der diese Recheneinheit umfasst, und/oder einer Steueranweisung für wenigstens einen oder jeden anderen primären Aktuator (24, 26, 28) der Einrichtung zur automatischen Steuerung (22) für die Steuerung des Luftfahrzeugs durch die Vorrichtung zur automatischen Steuerung.

2. Vorrichtung zur automatischen Steuerung gemäß Anspruch 1, wobei wenigstens eine besagte Recheneinheit (40) konfiguriert ist zum Berechnen einer Steueranweisung für den primären Aktuator (24, 26, 28), der diese Recheneinheit (40) umfasst, wobei der primäre Aktuator (24, 26, 28) konfiguriert ist zum Anwenden dieser Steueranweisung.

3. Vorrichtung zur automatischen Steuerung gemäß Anspruch 1 oder 2, wobei jeder primäre Aktuator (24, 26, 28) eine besagte Recheneinheit (40) umfasst, die konfiguriert ist zum Berechnen einer Steueranweisung für den primären Aktuator (24, 26, 28), der diese Recheneinheit (40) umfasst, und/oder einer Steueranweisung für wenigstens einen oder jeden anderen primären Aktuator (24, 26, 28) der Einrichtung zur automatischen Steuerung (22).

4. Vorrichtung zur automatischen Steuerung gemäß Anspruch 3, wobei jeder primäre Aktuator (24, 26, 28) konfiguriert ist zum Anwenden einer Steueranweisung, die berechnet ist von der besagten Recheneinheit (40), die in diesem primären Aktuator (24, 26, 28) umfasst ist.

5. Vorrichtung zur automatischen Steuerung gemäß Anspruch 3 oder 4, wobei wenigstens ein oder jeder primäre Aktuator (24, 26, 28) konfiguriert ist zum Liefern einer Flugrichtungsanweisung und Befehlen der Anzeige dieser Anweisung auf einer Flugdirektionsvorrichtung.

6. Vorrichtung zur automatischen Steuerung gemäß irgendeinem der vorhergehenden Ansprüche, wobei wenigstens eine besagte Recheneinheit (40) konfiguriert ist zum Berechnen, für den primären Aktuator (24, 26, 28), der diese Recheneinheit (40) umfasst, und/oder für wenigstens einen oder jeden anderen primären Aktuator (24, 26, 28) der Einrichtung zur automatischen Steuerung (22), einer Befehls-Steueranweisung und einer Kontroll-Steueranweisung gemäß zweier unterschiedlichen Weisen.

7. Vorrichtung zur automatischen Steuerung gemäß irgendeinem der vorhergehenden Ansprüche, wobei die Einrichtung zur automatischen Steuerung (22) aufweist einen primären Aktuator (24), der konfiguriert ist zum Einwirken auf das Rollen des Luftfahrzeugs, einen primären Aktuator (26), der konfiguriert ist zum Einwirken auf das Nicken des Luftfahrzeugs und/oder einen primären Aktuator (28), der konfiguriert ist zum Einwirken auf das Gieren des Luftfahrzeugs.

8. Vorrichtung zur automatischen Steuerung gemäß irgendeinem der vorhergehenden Ansprüche, aufweisend eine Kompensationseinrichtung (30), die aufweist wenigstens einen Kompensationsaktuator (32, 34, 36, 38), wenigstens eine besagte Recheneinheit (40), die in einem primären Aktuator (24, 26, 28) umfasst ist und konfiguriert ist zum Berechnen einer Kompensationsanweisung für wenigstens einen oder jeden anderen Kompensationsaktuator (32, 34, 36, 38).

9. Vorrichtung zur automatischen Steuerung gemäß irgendeinem der vorhergehenden Ansprüche, wobei eine besagte Recheneinheit (40) konfiguriert ist zum Berechnen, für den primären Aktuator (24, 26, 28), der diese Recheneinheit (40) umfasst, und/oder für wenigstens einen oder jeden anderen primären Aktuator (24, 26, 28) der Einrichtung zur automatischen Steuerung (22), einer Führungsanweisung für die Führung des Luftfahrzeugs durch die Vorrichtung zur automatischen Steuerung.

10. Vorrichtung zur automatischen Steuerung gemäß irgendeinem der vorhergehenden Ansprüche, aufweisend wenigstens zwei Einrichtungen zur automatischen Steuerung (22), deren primäre Aktuatoren (24, 26, 28) respektive vorgesehen sind zum parallelen Einwirken auf das Luftfahrzeug.

11. Drehflügel-Luftfahrzeug mit einem Bord-Messsystem (14), das konfiguriert ist zum Messen von Flugparametern des Luftfahrzeugs, einer Befehlszentrale (12), die von einer Besatzung benutzbar ist zum Steuern des Luftfahrzeugs, und einer Vorrichtung zur automatischen Steuerung (20) gemäß irgendeinem der vorhergehenden Ansprüche.

## Claims

1. An automatic pilot device for a rotary wing aircraft, comprising at least one automatic pilot assembly (22), each automatic pilot assembly (22) comprising at least two primary actuators (24, 26, 28) configured to act on the aircraft, in which at least one or each of the primary actuators (24, 26, 28) incorporates an electronic computation unit (40) configured to:
- communicate with the measuring system (14) onboard the aircraft configured to generate measuring signals representative of flight parameters of the aircraft, on the one hand, and/or a cockpit (12) usable by a crew to pilot the aircraft and configured to generate control signals as a function of the actions by the crew, on the other hand, and
- compute, as a function of the measuring signals and/or control signals, a piloting setpoint for the primary actuator (24, 26, 28) incorporating this computation unit and/or a piloting setpoint for at least one or each other primary actuator (24, 26, 28) of the automatic pilot assembly (22), for the piloting of the aircraft by the automatic pilot device.

2. The automatic pilot device according to claim 1, wherein at least one said computation unit (40) is configured to compute a piloting setpoint for the primary actuator (24, 26, 28) integrating this computation unit (40), the primary actuator (24, 26, 28) being configured to apply this piloting setpoint.

3. The automatic pilot device according to claim 1 or 2, wherein each primary actuator (24, 26, 28) incorporates one said computation unit (40) configured to compute a piloting setpoint for the primary actuator (24, 26, 28) incorporating this computation unit (40) and/or a piloting setpoint for at least one or each other primary actuator (24, 26, 28) of the automatic pilot assembly (22).

4. The automatic pilot device according to claim 3, wherein each primary actuator (24, 26, 28) is configured to apply a piloting setpoint computed by one said computation unit (40) integrated into this primary actuator (24, 26, 28).

5. The automatic pilot device according to claim 3 or 4, wherein at least one or each primary actuator (24, 26, 28) is configured to provide a flight direction setpoint, and to control the display of said setpoint on a flight director.

6. The automatic pilot device according to any one of the preceding claims, wherein at least one said computation unit (40) is configured to compute, for the primary actuator (24, 26, 28) incorporating this computation unit (40) and/or for at least one or each other primary actuator (24, 26, 28) of the automatic pilot assembly (22), a command piloting setpoint and a monitoring piloting setpoint in two different ways.

7. The automatic pilot device according to any one of the preceding claims, wherein the automatic pilot assembly (22) comprises a primary actuator (24) configured to act on the roll of the aircraft, a primary actuator (26) configured to act on the pitch of the aircraft and/or a primary actuator (28) configured to act on the yaw of the aircraft.

8. The automatic pilot device according to any one of the preceding claims, comprising a compensating assembly (30) comprising at least one compensating actuator (32, 34, 36, 38), at least one said computation unit (40) integrated into a primary actuator (24, 26, 28) being configured to compute a compensating setpoint for at least one or each compensating actuator (32, 34, 36, 38).

9. The automatic pilot device according to any one of the preceding claims, wherein one said computation unit (40) is configured to compute, for the primary actuator (24, 26, 28) incorporating this computation unit (40) and/or for at least one or each other primary actuator (24, 26, 28) of the automatic pilot assembly (22), a guiding setpoint for guiding of the aircraft by the other automatic pilot device.

10. The automatic pilot device according to any one of the preceding claims, comprising at least two automatic pilot assemblies (22), the respective primary actuators (24, 26, 28) of which are provided to act in parallel on the aircraft.

11. A rotary wing aircraft comprising an onboard measuring system (14) configured to measure flight parameters of the aircraft, a cockpit (12) usable by a crew to pilot the aircraft and an automatic pilot device (20) according to any one of the preceding claims.
